# EUROPEAN PATENT APPLICATION

(11) **EP 2 278 685 A2**
(43) Date of publication of application: **26.01.2011**
(21) Application number: 10251281.1
(22) Date of filing: 16.07.2010
(51) Int. Cl.: H02J 7/34, H02M 3/335

(54) **Power supply and charging circuit for high energy capacitors**

(30) Priority: 16.07.2009 AU 2009903337
(71) Applicant: Demain International Pty Ltd, Braeside VIC 3195 (AU)
(72) Inventor: Scrimshaw, David Leigh, Braeside, Victoria 3195 (AU); Van Der Linde, Benjamin Luke, Braeside, Victoria 3195 (AU)
(74) Representative: Gardiner, Stephen Robin

(57) **Abstract**

A switched mode power supply is disclosed for charging a load such as a high energy capacitor. The power supply is adapted to operate in a substantially constant power mode and includes a flyback converter having a primary circuit including a controller and a secondary circuit for providing an output to the load. The power supply is arranged such that it utilizes substantially no current limiting in the secondary circuit. The load includes a plurality of high energy capacitors and a plurality of terminals. The terminals are connected to the capacitors such that the capacitors may be arranged in a first configuration for charging the load and may be arranged in a second configuration for discharging the load.

## Description

The present invention relates to a power supply and charging circuit suitable for charging high energy storage capacitors.

High energy storage capacitors also known as ultra-capacitors or super capacitors are a viable alternative to storage batteries for powering a range of electrical devices such as power tools including portable power tools.

Unlike a storage battery a super capacitor presents an extremely low impedance when it is initially being charged that is almost a short circuit.

Standard battery chargers and power supplies typically include protective or current limiting circuits that inhibit or shut down when trying to charge a low impedance load such as a super capacitor. Other types of chargers or power supplies operate in a constant current mode and may be capable of charging this type of load. However a disadvantage of a constant current mode charger is that with a given amount of power it may take such a charger relatively much longer to charge a load of this type.

Another problem with high energy storage capacitors is that they are typically available in limited sizes or voltages e.g. 2.7V 400F, 2.3V 220F, while electrical devices such as power tools that include readily available motors/gearboxes require higher values or voltages. The problem may be addressed in part by joining capacitors in series. However, a recognized problem when charging a series connected string of ultra-capacitors is that the voltages of the cells usually become different from one another. One prior art solution to this problem is to add balancing circuits to try to make every cell in an array have an equal voltage. However, the use of balancing circuits adds considerable cost and complexity to a power supply. The balancing circuits become larger and more expensive as the capacity and charging speed of the power supply increases.

The present invention may provide a charger that may minimize charging time by making maximum power available when it is needed most. Preferably power may be limited by available power, load and wiring impedance only. Available power generally is determined by fundamental capacity issues such as size and power rating of the power supply which for practical reasons should be kept as low as possible.

The present invention may provide a switched mode power supply (SMPS) including a flyback converter for charging a load such as a high energy capacitor. A typical flyback SMPS includes negative feedback sensing to maintain desired operating characteristics including voltage regulation at the output. Additionally, most flyback SMPSs employ secondary sensing to inhibit output runaway in case of loss of feedback sensing and/or if the output becomes short circuited. Secondary sensing is generally accomplished via an optical isolator that monitors voltage at the output and feeds back an appropriate control signal to the associated controller. In the case of a low impedance load such as a super capacitor a typical flyback SMPS will shut down or inhibit or limit its operation.

The present invention may provide a charger suitable for high energy storage capacitors that may avoid a need for a capacitor balancing circuit.

The present invention may provide a capacitor array, pack or module including terminals that allow each capacitor of the array to be charged in parallel. The capacitor array, pack or module may include multiple charging connections such that all cells in the array or pack are connected to a charger in parallel. The charging voltage may be selected such that none of the cells in the array or pack is overcharged. The charging connections may be arranged such that when the capacitor array or pack is inserted into a power tool at least some capacitors in the array or pack are connected in series to provide a higher voltage than is available from any one capacitor in the capacitor array or pack. The present invention may provide a SMPS including a flyback converter that alleviates the disadvantages of the prior art. The present invention may also provide a capacitor array that avoids a need for a capacitor balancing circuit at least during a charging cycle.

According to one aspect of the present invention there is provided a switched mode power supply for charging a load such as a high energy capacitor and adapted to operate in a substantially constant power mode wherein said power supply includes a flyback converter having a primary circuit including a controller and a secondary circuit for providing an output to said load, wherein said power supply is arranged such that it utilizes substantially no current limiting in said secondary circuit, and wherein said load includes a plurality of high energy capacitors and a plurality of terminals, said terminals being connected to said capacitors such that said capacitors may be arranged in a first configuration for charging said load and may be arranged in a second configuration for discharging said load.

The first configuration may include each capacitor in the array connected in parallel. The second configuration may include at least some capacitors in the array connected in series.

The controller in the primary circuit may include pulse width modulation (PWM). A bias current associated with the PWM controller may be adjusted to avoid shut down of the power supply when the load is substantially a short circuit.

When the load begins to charge its voltage will generally increase. As voltage increases current may be reduced to maintain a constant power mode set for the charger (power = voltage x current). Constant power mode may be effected by adjusting current in the primary circuit.

An advantage of constant power mode is that it may require a relatively smaller amount of power to charge a load of a given size in a given time. A power supply embodying the principles of the present invention may therefore be more efficient in cost and size for a given power rating.

When the load becomes fully charged its terminal voltage may be regulated to avoid exceeding a design limit. At a predetermined terminal voltage the power supply of the present invention may switch to a "constant voltage" mode to maintain the load in a fully charged state. Constant voltage mode may be provided in any suitable manner and by any suitable means such as by means of a feedback control loop.

According to a further aspect of the present invention there is provided a switched mode power supply for charging a load such as a high energy capacitor and adapted to operate in a substantially constant power mode wherein said power supply includes a flyback converter having a primary circuit including a controller and a secondary circuit for providing an output to said load, wherein said secondary circuit includes means for isolating said load to substantially prevent its discharge at least when said power supply is turned off, and wherein said load includes a plurality of high energy capacitors and a plurality of terminals, said terminals being connected to said capacitors such that said capacitors may be arranged in a first configuration for charging said load and may be arranged in a second configuration for discharging said load.

The isolating means may include a diode. The isolating means may be located at an upstream point in the charging circuit to substantially prevent discharge of the load. The isolating means preferably is located in the charging circuit such that it is upstream of elements including resistors etc. that may cause current to flow and hence discharge the load.

Having regard to the relatively large number of charge cycles that the power supply of the present invention may be required to reliably deliver, component stress may be controlled or maintained within specified limits by incorporating temperature sensing of vital components in the circuit associated with the power supply.

According to a still further aspect of the present invention there is provided a method of charging an array of high energy capacitors having a plurality of terminals including arranging said terminals such that said capacitors are connectable in a first configuration for charging said array and are connectable in a second configuration for discharging said array.

Preferred embodiments of the present invention will now be described with reference to the accompanying drawing which shows one form of a fast charger according to the principles of the present invention.

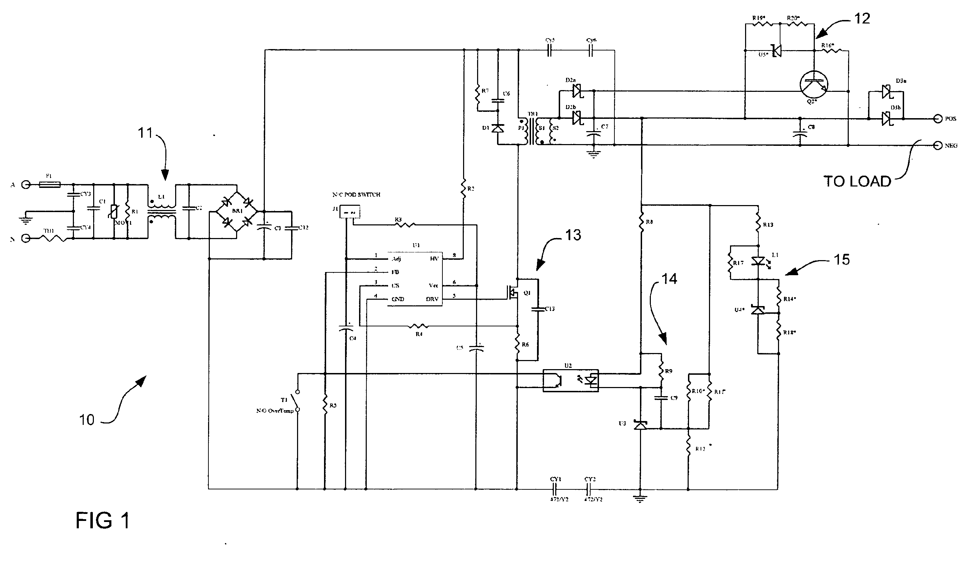

Figure 1 shows a fast charger 10 according to the present invention. The charger 10 includes a full wave rectifier stage 11 including a prefilter. DC power supplied by rectifier stage 11 is switched via mosfet transistor Q1 at a specific frequency (eg. 100 KHz) through coupled storage inductor TR1. The gate of transistor Q1 is controlled via PWM controller U1. Controller U1 may include an integrated circuit controller such as a device type NCP1216 manufactured by ON Semiconductor. Controller U1 utilizes pulse width modulation to provide desired charging characteristics including constant power and constant voltage control. When transistor Q1 is on, energy is stored in the primary circuit of inductor TR1 but is not transferred to the secondary circuit because diode D2 is biased off. When transistor Q1 is switched off the energy stored in the primary circuit of inductor TR1 is transferred to the secondary circuit at which time diode D2 is biased on due to Faraday's Law. Note that inductor TR1 is not a transformer in the normal sense, rather it is an inductively coupled energy storage device that is tightly magnetically coupled. Inductor TR1 also provides galvanic isolation between input and output of the charger. This process is repeated at the switching frequency whereby energy is transferred to the output load (such as a super capacitor) each time that diode D2 is biased on, ie. transistor Q1 is in its off state during the cycle "flyback". Power from Inductor TR1 is transferred to the load via isolating diode D3. Isolating diode D3 is placed at a most upstream point in the circuit to prevent discharge of a load such as high energy capacitor array when the charger is turned off.

To protect the load (high energy capacitor array) from excess voltage, the charger includes an over voltage circuit 12. Over voltage circuit 12 includes transistor Q2, controlled diode U5 and resistor ladder R16, R19, R20 to shunt (or cap) excess voltage to below a present level. This shunting of excess voltage will generate additional thermal energy which will be dissipated by transistor Q2. Over voltage circuit 12 is adapted to protect the load (high energy capacitor array) as well as the charger itself.

To provide constant power control, input current that is switched via transistor Q1 is also monitored by input current sensing circuit 13. Input current sensing circuit 13 includes resistor R6 for converting the input current to a voltage which is supplied to PWM controller U1 via resistor R4. Significantly the charger does not utilize current limiting on the output side of the circuit. An advantage of this is that it may avoid wasting power in the current limiting circuit including significantly higher I²R losses and overheating as well as degrading reliability and MTBF (mean time before failure). Given the significantly higher currents employed in the output compared to prior art designs a true constant power limited device may be provided without the associated power losses.

Output voltage is sensed via output voltage sensing circuit 14. Output voltage sensing circuit 14 includes controlled diode U3, capacitor C9 and resistor strings R8, R9 and R10, R11, R12.

The sensed output voltage is supplied to PWM controller U1 via optical coupling element U2 (to maintain galvanic isolation between input and output) in the form of a negative voltage feedback signal. This enables PWM controller U1 to adjust pulse width of the signal driving transistor Q1 to provide constant voltage control after completion of the main charging cycle. Coupling element U2 operates in combination with reference diode U3 to cause a reduction of voltage across resistor R5 (which then lowers PWM duty cycle), whenever output voltage increases above a pre-set reference determined by operating characteristics of the load (high energy capacitor array).

When the load is at or near full charge controller U1 may switch to a burst mode of operation. During burst mode controller U1 may "skip" certain switching cycles to increase conversion efficiency. This has the effect of reducing overall switching frequency of the controller during these periods while maintaining pulse width at minimum levels.

The charger includes an over temperature sensor T1 for monitoring excess temperature. The over temperature sensor is adapted to shut down a primary circuit associated with PWM controller U1 to prevent excess temperature.

The charger includes a normally closed pod switch (not shown) for detecting when a load (high energy capacitor array) is inserted into the charger. The pod switch is connected to controller U1 via connector J1. Its main function is to keep the charger in a low power off state (when a load is NOT inserted) by forcing it to run a Hard Ship cycle burst mode. When a load is inserted such that full charge mode is initiated, this may also act as a safety feature which may cause a "soft-startup" when a discharged high energy capacitor array is first inserted into the charger to avoid a high instantaneous current and possibly arcing during this time.

The charger includes a display circuit 15 including resistor string R13, R14 and R18 and controlled diode UV and LED diode L1. Display circuit 15 is arranged such that LED diode L1 comes on (at a specific voltage level) to indicate that the load is at or near full charge.

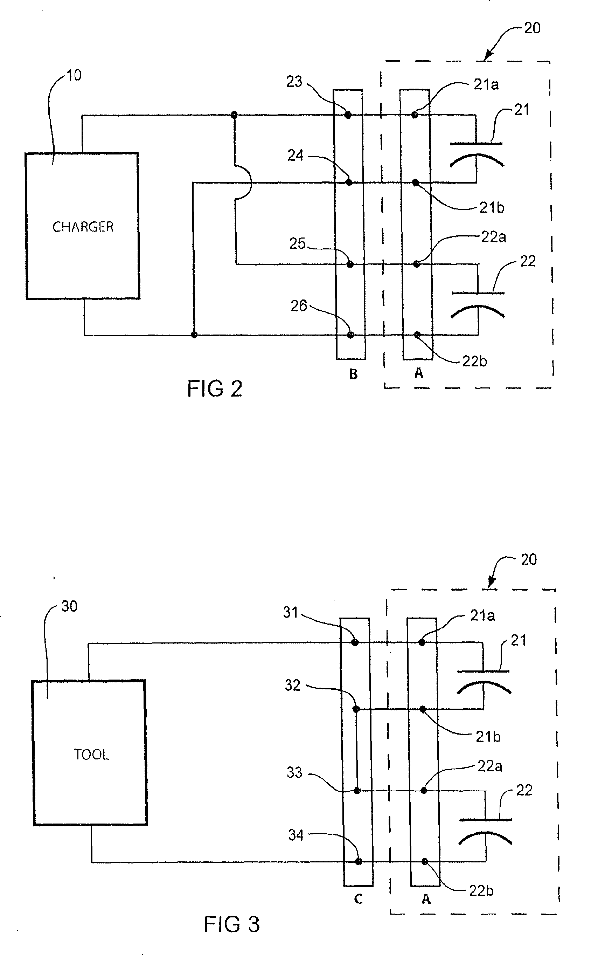

Fig. 2 shows a load comprising an array 20 of super capacitors 21, 22 connected to charger 10. Super capacitors 21, 22 are assembled in array 20 including terminator A. Terminator A includes individual terminals 21 a, 21 b associated with super capacitor 21 and individual terminals 22a, 22b associated with super capacitor 22. Array 20 is connected to charger 10 via terminator B associated with charger 10. Terminator B includes terminals 23-26. Terminals 23 and 25 are connected to the positive output terminal (POS) of charger 10 and terminals 24 and 26 are connected to the negative output terminal (NEG) of charger 10. The arrangement of the terminals is such that when terminators A and B are coupled together capacitors 21 and 22 are connected to charger 10 in parallel.
Fig. 3 shows the array 20 of super capacitors 21, 22 connected to an electrical power tool 30. Power tool 30 is connected to array 20 via terminator C. Terminator C includes individual terminals 31-34. Terminals 31 and 34 are connected to respective input terminals of tool 30. The arrangement of terminals is such that when terminators A and C are coupled together capacitors 21 and 22 are connected to tool 30 in series.

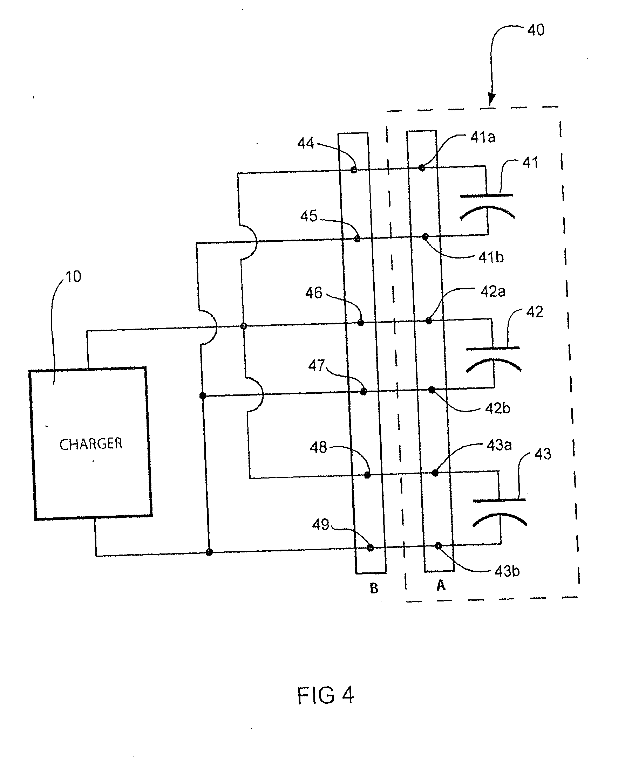

Fig. 4 shows a load comprising an array 40 of super capacitors 41, 42, 43 connected to charger 10. Super capacitors 41, 42, 43 are assembled in array 40 including terminator A. Terminator A includes individual terminals 41 a, 41 b associated with super capacitor 41, individual terminals 42a, 42b associated with super capacitor 42 and individual terminals 43a, 43b associated with super capacitor 43. Array 20 is connected to charger 10 via terminator B associated with charger 10. Terminator B includes terminals 44-49. Terminals 44, 46 and 48 are connected to the positive output terminal (POS) of charger 10 and terminals 45, 47 and 49 are connected to the negative output terminal (NEG) of charger 10. The arrangement of the terminals is such that when terminators A and B are coupled together capacitors 41, 42 and 43 are connected to charger 10 in parallel.

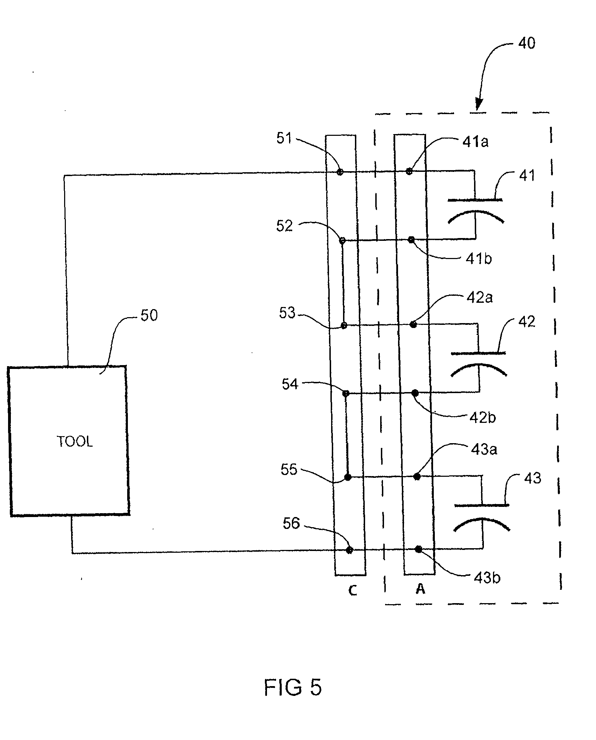

Fig. 5 shows the array 20 of super capacitors 41, 42, 43 connected to an electrical power tool 50. Power tool 50 is connected to array 40 via terminator C. Terminator C includes individual terminals 51-56. Terminals 51 and 56 are connected to respective input terminals of tool 50. Terminals 52 and 53 are connected together. Terminals 54 and 55 are also connected together. The arrangement of terminals is such that when terminators A and C are coupled together capacitors 41, 42 and 43 are connected to tool 50 in series.

Finally, it is to be understood that various alterations, modifications and/or additions may be introduced into the constructions and arrangements of parts previously described without departing from the spirit or ambit of the invention.

## Claims

1. A switched mode power supply for charging a load such as a high energy capacitor and adapted to operate in a substantially constant power mode wherein said power supply includes a flyback converter having a primary circuit including a controller and a secondary circuit for providing an output to said load, wherein said power supply is arranged such that it utilizes substantially no current limiting in said secondary circuit, and wherein said load includes a plurality of high energy capacitors and a plurality of terminals, said terminals being connected to said capacitors such that said capacitors may be arranged in a first configuration for charging said load and may be arranged in a second configuration for discharging said load.

2. A switched mode power supply according to claim 1 wherein said constant power mode is effected by adjusting current in said primary circuit.

3. A switched mode power supply according to claim 1 or 2 wherein said controller includes pulse width modulation (PWM).

4. A switched mode power supply according to claim 1, 2 or 3 wherein a bias current associated with said controller is adjusted to avoid shut down of said power supply when said load is substantially a short circuit.

5. A switched mode power supply according to any one of the preceding claims including means for isolating said load to substantially prevent its discharge at least when said power supply is turned off.

6. A switched mode power supply for charging a load such as a high energy capacitor and adapted to operate in a substantially constant power mode wherein said power supply includes a flyback converter having a primary circuit including a controller and a secondary circuit for providing an output to said load, wherein said secondary circuit includes means for isolating said load to substantially prevent its discharge at least when said power supply is turned off and wherein said load includes a plurality of high energy capacitors and a plurality of terminals, said terminals being connected to said capacitors such that said capacitors may be arranged in a first configuration for charging said load and may be arranged in a second configuration for discharging said load.

7. A switched mode power supply according to claim 5 or 6 wherein said isolating means is located upstream of elements that cause current to flow and discharge said load.

8. A switched mode power supply according to claim 5, 6 or 7 wherein said isolating means includes a diode.

9. A capacitor array including a plurality of high energy storage capacitors and a plurality of terminals, said terminals being arranged such that said capacitors may be connected in a first configuration for charging said array and may be connected in a second configuration for discharging said array.

10. A capacitor array according to claim 9 wherein said first configuration includes at least some capacitors in said array connected in parallel.

11. A capacitor array according to claim 9 or 10 wherein said second configuration includes at least some capacitors in said array connected in series.

12. A method of charging an array of high energy capacitors having a plurality of terminals including arranging said terminals such that said capacitors are connectable in a first configuration for charging said array and are connectable in a second configuration for discharging said array.

13. A method according to claim 12 wherein said first configuration includes at least some capacitors in said array connected in parallel.

14. A method according to claim 12 or 13 wherein said second configuration includes at least some capacitors in said array connected in series.
